Europäisches Patentamt

European Patent Office

Office européen des brevets

(19)

(11) Publication number : **0 204 732 B2**

(12) # NEW EUROPEAN PATENT SPECIFICATION

(45) Date of publication of the new patent
specification : **13.07.94 Bulletin 94/28**

(21) Application number : **85905707.7**

(22) Date of filing : **04.11.85**

(86) International application number :
**PCT/US85/02162**

(87) International publication number :
**WO 86/03628 19.06.86 Gazette 86/13**

(51) Int. Cl.⁵ : **H01R 43/18**

(54) ELECTRICAL CONNECTOR HAVING IN-LINE MANUFACTURED SEAL AND METHOD OF
MANUFACTURE.

(30) Priority : **06.12.84 US 678735**

(43) Date of publication of application :
**17.12.86 Bulletin 86/51**

(45) Publication of the grant of the patent :
**14.03.90 Bulletin 90/11**

(45) Mention of the opposition decision :
**13.07.94 Bulletin 94/28**

(84) Designated Contracting States :
**DE FR GB IT**

(56) References cited :
**EP-A- 0 114 479**
**GB-A- 953 869**
**US-A- 3 594 696**
**US-A- 3 681 517**
**US-A- 3 937 545**

(73) Proprietor : **AMP INCORPORATED**
**P.O. Box 3608**
**470 Friendship Road**
**Harrisburg Pennsylvania 17105 (US)**

(72) Inventor : **SCHUBERT, Paul, Clifford**
**729 Erford Road**
**Camp Hill, PA 17011 (US)**
Inventor : **THAKRAR, Anil, C.**
**533 Springhouse Road**
**Camp Hill, PA 17011 (US)**

(74) Representative : **Warren, Keith Stanley et al**
**BARON & WARREN**
**18 South End**
**Kensington**
**London W8 5BU (GB)**

EP 0 204 732 B2

Jouve, 18, rue Saint-Denis, 75001 PARIS

## Description

The present invention relates generally to the field of electrical connectors, and, more particularly, to an environmental connector having in-line manufactured seals and to a method of manufacturing such connectors.

Typically, electrical connectors are constructed from a plurality of parts which are separately fabricated and then assembled together into complete connectors. This is not a fully satisfactory procedure because the handling and assembling of the individual components tends to increase both manufacturing and labor costs. Also, because the individual parts are manufactured separately, there is an increased likelihood that certain parts will not fit together properly resulting in imperfectly-made connectors and in an excessive number of rejects.

If the connector is designed for outside use, for example, on vehicles such as recreational or off-road vehicles, it is especially important that the connector be effectively sealed to prevent moisture, dust or other contaminants from reaching the interior of the connector where they can cause corrosion or otherwise prevent proper operation of the connector. Commonly, environmental connectors are relatively complex in design so as to reliably seal the connectors both where the conductor wires enter into the connectors and where the terminal members extend from the connectors.

It is also important that the connectors be able to reliably withstand the effects of any vibration or other rough handling that they are likely to be subjected to in use.

GB-A-953,869 discloses a metal housing or collar formed internally with a bung of elastomer disposed between internal annular flanges thereof, the bung having through cores and being moulded within the collar.

US-A-3 681 517 discloses a connector body comprising an elastomeric grommet bonded to an insulator of rigid material the composite body having a plurality of bores.

EP-A-0 114 479 discloses a connector having a body comprising a rigid part and a flexible part joined at an interface with bores passing through the composite body across the interface.

It is an object of the present invention to provide an improved method of manufacture of an electrical connector having rigid and elastomeric portions and an improved electrical connector.

According to one aspect thereof the present invention consists in a method as defined in claim 1, of making an electrical connector having rigid and elastomeric portions.

According to another aspect thereof the present invention consists in an electrical connector as defined in claim 6, having rigid and elastomeric portions.

US-A-3 594 696 discloses an electrical connector having an insulating housing into which has been moulded an elastomeric seal into which electrical terminals have been moulded.

US-A-3 937 545 discloses an electrical connector having an insulating housing into which a bung seal has been inserted. Electrical leads having electrical terminals crimped thereto, extend through passageways in the bung seal.

An embodiment of the present invention will now be described, by way of example, with reference to the accompanying partly diagrammatic drawings, in which:-

Figure 1 is a cross-sectional view of a presently preferred embodiment of the connector housing according to the present invention;

Figure 2 is a cross-sectional view of a mold assembly for molding the connector housing of Figure 1;

Figure 3 is a cross-sectional view illustrating the assembly including the connector housing of Figure 1 and forming means clamped thereto;

Figure 4 illustrates the forming of the sealing member within the connector housing of Figure 1;

Figure 5 illustrates a conductor wire and terminal positioned with the connector of Figure 1; and

Figure 6 is an exploded view of the electrical connector according to a presently preferred embodiment of the invention prior to insertion of the electrically conductive means therein.

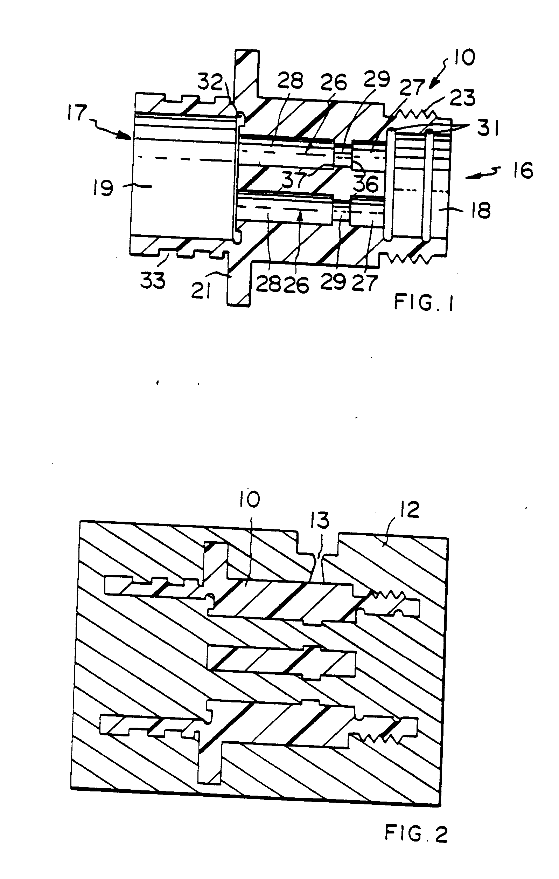

Figure 1 illustrates a connector housing for use in the electrical connector of the present invention. The housing is generally designated by reference numeral 10 and is preferably formed of a non-metallic material so that it will not be subject to rust and corrosion, and most preferably comprises a one-piece, plastic member formed by injection molding in a conventional manner.

For completeness, Figure 2 schematically illustrates a cross-sectional view of an injection mold 12 for molding connector housing 10. Although not illustrated in Figure 2, mold 12 is, as is known in the art, formed of a plurality of components to permit the mold to be easily separated after housing 10 is formed therein.

Connector housing 10 is preferably formed of a relatively rigid plastic that will reliably retain its shape, and a number of plastic materials commonly used in the connector field would be acceptable. One particularly suitable material, however, comprises glass-reinforced and flame-retardant nylon.

In operation, the molding material is introduced into the mold 12 through one or more sprue channels 13.

The mold 12 itself is preferably preheated to about 180°F. prior to introduction of the molding material. The mold material is then heated to a temperature of from about 500°F. to about 550°F. for 20 to 30 seconds. Separation of the mold components, ejection of the molded housing, and other steps in the injection molding art are then carried out in a conventional manner and need not be described herein.

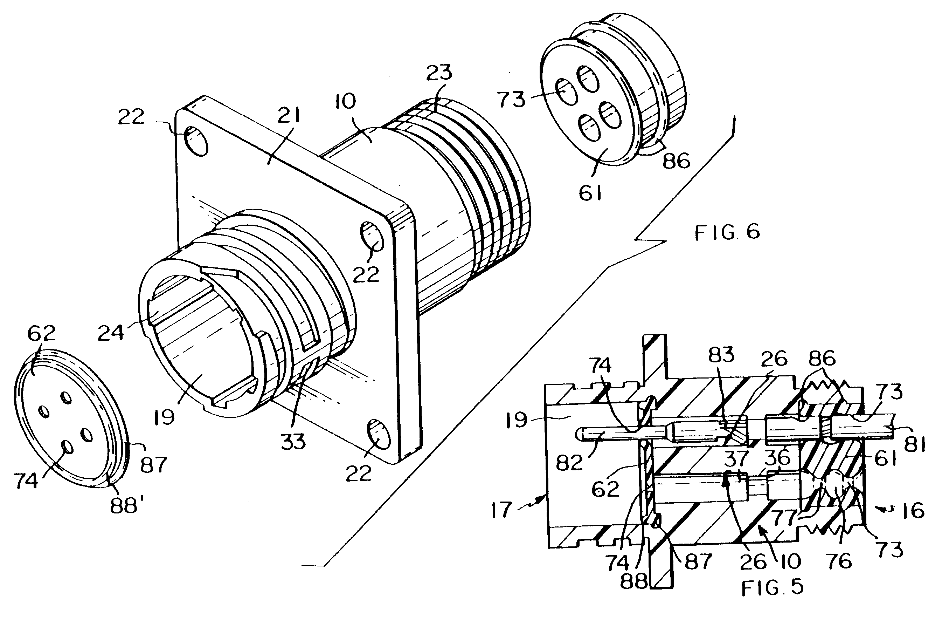

With reference to Figures 1 and 6, connector housing 10 comprises a generally cylindrical-shaped element having opposed first and second ends 16 and 17, respectively. A first recess or cavity 18 extends into housing 10 from the first end 16, while a second, somewhat larger recess or cavity 19 extends into the housing from the second end 17. Integral with housing 10 and extending radially therefrom is a mounting flange 21 with four holes 22 cut therethrough for mounting the connector to a panel or other support (not shown). Threads 23 formed in the housing 10 could also be used for mounting purposes if desired.

A number of keyways 24 are preferably provided along the walls of recess 19 for polarizing purposes. A plurality of passageways 26 extend longitudinally through housing 10 from recess 18 to recess 19, and are provided to receive a plurality of electrically conductive means in the form of conductor wires having terminals attached thereto as will be explained more fully hereinafter. In the embodiment illustrated and described herein, housing 10 is formed with four passageways 26 of generally circular cross section for receiving four electrically conductive means. It should be understood, however, that the connector can be designed to accommodate any desired number of electrically conductive means without departing from the invention.

As shown in Figure 1, each passageway 26 is formed to define first and second passageway portions 27 and 28 of substantially equal cross-sectional diameter separated by a portion 29 of reduced diameter defining annular shoulders 36 and 37 between passageway portions 27 and 29 and passageway portions 28 and 29, respectively.

Recess 18 is formed to define a pair of annular grooves 31 around its circumference, while recess 19 includes an annular groove 32 around its base which extends both radially and longitudinally of the recess 19. As will be explained hereinafter, grooves 31 and 32 comprise interlocking means for locking sealing members formed within cavities 18 and 19 in place within housing member 10.

Finally, threads 33 are formed on the outer surface of housing 10 around recess 19 for attaching the male illustrated connector to a corresponding female connector (not shown).

The electrical connector of the present invention is especially designed for outside use, for example, as a connector for trucks and other vehicles, and, therefore, must not only be very rugged, but also must be effectively sealed so as to prevent moisture, dust or other contaminating materials from entering into the connector, as this can damage the connector and create a fire hazard. However, it is to be understood that the present invention may be used inside in a variety of conditions, such as dust-filled environments.

In order to seal a connector, it is known to insert separately manufactured sealing elements of various types into various locations within or around a connector; and these are generally effective to varying degrees. Because, however, these sealing elements are manufactured separately and later assembled into the connector, both manufacturing and labor costs are increased; and also, there is a greater possibility that the separately manufactured connector components will not fit together properly, resulting in a reject or an imperfect connector.

These and other deficiencies have been obviated in the present invention by manufacturing the connector by a method which includes forming highly effective sealing members directly within the connector housing in an in-line process.

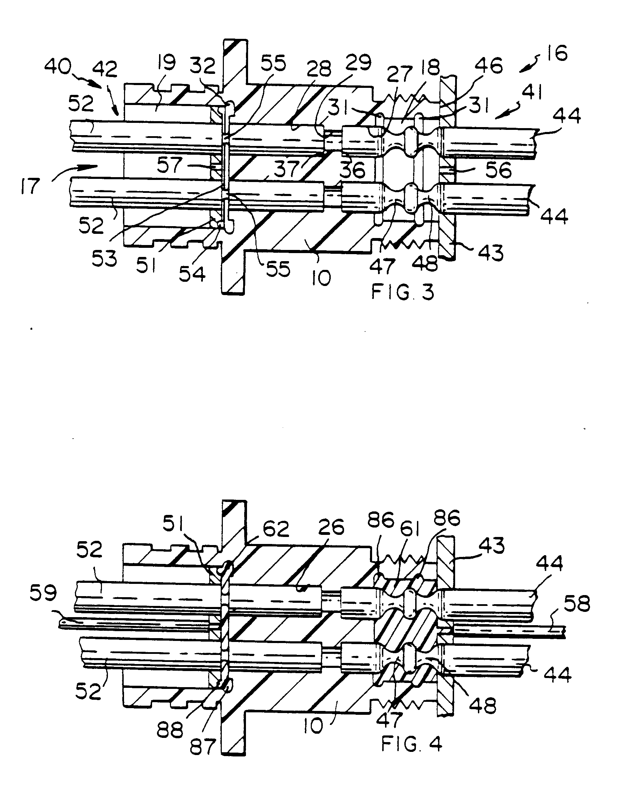

Figure 3 illustrates the first step of a presently preferred method of manufacturing the sealing member. which comprises mounting a forming means to the housing 10 for defining molds within cavities 18 and 19. The forming means is generally designated by reference numeral 40 and includes a first forming assembly 41 adapted to be mounted to the first end 16 of the housing, and second forming assembly 42 adapted to be mounted to the second end 17 of the housing.

First forming assembly 41 comprises a plate 43, preferably of metal, for closing cavity 18 and having a plurality of rods 44 mounted thereto. The number and positioning of the rods correspond to the number and position of passageways 26 such that when plate 43 is pressed down against first end 16, and, in particular, against annular rim 46 defined around recess 18, the rods 44 will extend into passageway portions 27 and rest firmly against shoulders 36 formed between passageway portions 27 and passageway portions 29.

Rods 44 may be made of Teflon, stainless steel, or another appropriate material and are sized to fit tightly within passageway portions 27 so as to prevent elastomeric material injected into cavity 18 from entering into the passageways.

Rods 44 are formed to define two areas 47 and 48 of reduced diameter to define a rod portion of variable cross section. These portions of variable cross section are positioned on the rods 44 so to be located within cavity 18 when the forming assembly 41 is mounted to connector housing 10 as shown in Figure 3.

Second forming assembly 42 also includes a plate 51 of metal or the like supporting a plurality of rods 52. Rods 52 are adapted to fit into passageway portions 28 and are sized to extend to and firmly press against annular shoulder 37 formed between passageway portions 28 and 29 when forming assembly 42 is in position.

Plate 51 is sized to just fit into recess 19 with a tight fit between the plate and the wall of the recess and is inserted into recess 19 slightly spaced from annular groove 32 to define a closed cavity 53 between the base of recess 19 and the bottom face of plate 51. As can be seen in Figure 3, the bottom face of plate 51 includes an annular groove 54 around its periphery which helps define cavity 53.

As also illustrated in Figure 3, rods 52 are shaped to define reduced diameter portions 55 which extend across the width of cavity 53.

After the forming assemblies 41 and 42 are firmly clamped in position, an elastomeric material is injected into cavities 18 and 53 through small openings 56 and 57 provided in plates 43 and 51, respectively. More particularly, as shown in Figure 4, syringes 58 and 59 or other suitable injection devices are inserted into openings 56 and 57, respectively; and the cavities 18 and 53 are filled with elastomeric material which is then allowed to cure and form conductor wire sealing member 61 and terminal sealing member 62. While the elastomeric material is being injected and cured in cavities 18 and 53, the rods 52 are firmly supported by appropriate structure (not shown) to prevent any rotation or other movement of the connector housing.

Although there are a number of elastomeric materials that can be used for forming sealing members 61 and 62, a presently preferred material comprises an elastomeric material having low-temperature curing ability; and a particularly preferred material comprises: two parts of Silastic 595, Part A; three parts of Silastic 595, Part B; and 10% by weight of CF3-6559 accelerator, all produced by Dow-Corning of Midland, Michigan. Curing of this material can be accomplished to 90% cure in 35 seconds at 121°C (250°F.), according to the Oscillating Disk Rheometer.

The physical properties of 2:3 Silastic 595 with 10% CF3-6559 are set forth in the following table:

|  | As Molded | | 7 Day 48.9°C (120°F) | |
|  | No Post Cure | Post Cure | No Post Cure | Post Cure |
| --- | --- | --- | --- | --- |
| Hardness, Shore A | 38 | 48 | 47 | 46 |
| 100% Modulus, psi | 130 | 240 | 280 | 280 |
| 200% Modulus, psi | 330 | 660 | 720 | 690 |
| 300% Modulus, psi | 600 | — | — | — |
| Tensile Strength, psi | 620 | 740 | 1020 | 870 |
| Elongation, % | 305 | 215 | 265 | 240 |
| Tear Strength, ppi | 67 | 49 | 50 | 51 |
| Compression Set, % | 62.9 | 3.3 | 0.6 | 2.6 |

These properties were determined on slabs which were produced in a slab mold in a Boy press using 35 seconds cure at 250°F. (121°C). The material hardens with post curing, increasing by about 10 points. Post curing also increases the tensile properties while decreasing the elongation and tear properties. Compression set is reduced significantly by post curing. The post cure cycle used was 16 hours at 125°C.

By using a fast, low-temperature curing material for the sealing members (e.g., low-temperature curing is normally considered as being between about 121°C-149°C (250-300°F)), damage to the plastic housing 10 is avoided while still obtaining a highly effective seal.

After curing, both conductor wire sealing member 61 and terminal sealing member 62 will be firmly locked in place within housing 10 in interlocking engagement with the walls of cavities 18 and 19, respectively. More particularly, sealing member 61 will be formed with annular ridges 86 extending into annular groves 31 in the wall of cavity 18 to lock sealing member 61 in position; while sealing member 62 will be formed with annular ridges 87 and 88 extending into annular grooves 32 and 54 in the wall of cavity 19 and in plate 51, respectively, for locking sealing member 62 firmly in position.

Following curing and post curing of sealing members 61 and 62, forming assemblies 41 and 42 are removed from the connector housing 10. As shown in Figure 5, removal of first forming assembly 41 provides a plurality of passageways 73 extending through conductor wire sealing member 61; and removal of second forming assembly 42 results in a plurality of passageways 74 extending through terminal sealing member 62. Because of the configuration of rods 44, passageways 73 will have a variable cross-sectional shape which includes portions 76 of relatively wide cross section and portions 77 of relatively narrow cross section. Similarly, because of the configuration of rods 52, and, in particular, because of portions 55 thereon of reduced cross-section, passageways 74 are of relatively small cross section and, in fact, are smaller than the size of the terminal means that are to be extended therethrough.

Upon removal of forming assemblies, conductive means comprising conductor wires 81 and terminals 82 are inserted into the connector. Preferably, each conductor wire is first crimped around or otherwise secured to the end of a terminal member, and the conductor wire/terminal assemblies are then inserted into the connector from end 16 and pushed through passageways 73, 26 and 74 until terminal member 82 is fully extended into cavity 19 as shown in Figure 5. Terminal members 82 each are formed with a plurality of spring fingers 83 on their back end. When the terminal members have been fully inserted such that the terminal members will fully clear shoulder 37 in passageway 26, the spring fingers 83 will spring open to prevent rearward movement of the terminal members, Similarly, the conductor wires 81 will engage shoulder 36 to prevent further forward movement of the conductor wires. Thus. the terminal members and attached conductor wires will be effectively locked in place within the connector.

Sealing members 61 and 62 will very effectively seal the connector and prevent moisture, dust or other debris from entering into the connector. More particularly, the conductor wires 81 are of a greater diameter than the diameter of portions 77 of reduced cross-section of passageways 73 of conductor sealing member 61. Accordingly, when the conductor wires 81 are inserted into the passageways 73, the walls of the passageways will be deformed and compress the elastomeric material of the sealing member 61 which then hold the conductors in a tight grip as shown in Figure 5 positively preventing fluid from entering into the connector around the conductor wires.

In addition, when terminal members 82 are pushed through passageways 74 in terminal sealing member 62, they will deform the peripheries of the smaller diameter passageways 74 outwardly causing the sealing member 62 to firmly grip and seal the connector around the terminal members.

Thus, with the present invention, an electrical connector is provided which will effectively seal the interior of the connector against the entrance of moisture or other damaging materials. In addition, the connector is manufactured by a method whereby the sealing members are formed in place in the connector in an in-line process rather than being manufactured separately and later assembled. This ensures that the seals will fit properly and reduces the cost of manufacturing the connector.

While what has been described constitutes a presently most preferred embodiment, it should be understood that the invention can take other forms. For example, while what has been described constitutes a male connector and its method of manufacture, the invention also applies to female connectors having female terminal members and their method of manufacture; and the term "terminal member" as used herein is intended to include both male and female terminal members.

## Claims

1. A method for making an electrical connector having rigid and elastomeric portions, a plurality of passageways extending through the rigid and elastomeric portions and a plurality of electrically conductive means disposed in respective passageways, the method being characterized by the steps of:

    providing a connector housing (10) including means defining at least one cavity (18) at one end thereof, and a plurality of passageways (26) extending through a rigid portion of said housing (10) and opening into said cavity;

    positioning a forming plate (43) to substantially close at least a portion of the at least one end cavity (18) to form a mould for receiving elastomeric sealing material for forming a sealing member (61) within the cavity (18), the forming assembly (41) including a structure (44) for defining passageways (73) in the sealing member (61);

    closing said passageways (26) extending through the rigid portion of the housing (10);

    forming a sealing member (61) within the substantially closed cavity, the sealing member (61) having a plurality of passageways (73) extending therethrough positioned to be generally aligned with and to communicate with the plurality of passageways (26) in the connector housing (10), removing the forming assembly (41); and

    positioning electrically conductive means within the plurality of passageways.

2. The method of making an electrical connector as claimed in claim 1, wherein the connector housing member (10) includes a cavity (19) at a second end of the housing (10) and the method is further characterized by the steps of:

positioning a second forming assembly (42) to substantially close at least a portion of the second end cavity (19) to form a mould for receiving elastomeric sealing material for forming a second sealing member (62) within the cavity (19), the second forming assembly (42) including a structure (52) for defining passageways (74) in second sealing member (62); and

forming a second sealing member (62) within the substantially closed cavity, the second sealing member (62) having a plurality of passageways (74) extending there-through positioned to be generally aligned with the plurality of passageways (26) in the connector housing (10).

3. The method recited in claim 1 or 2, characterized in that said forming assembly positioning step includes extending a plurality of rods into said plurality of passageways (26) in said connector housing for closing said passageways in said connector housing, said rods further including means for defining said plurality of passageways (73,74) in the sealing member (61,62).

4. The method recited in claim 1, 2 or 3, characterized in that said forming step includes:

injecting an elastomeric sealing material into said substantially closed cavity; and

curing said elastomeric material within said substantially closed cavity to form an elastomeric sealing member (61,62) within said cavity.

5. The method of making an electrical connector as recited in claim 2, characterised in that said first and second end sealing members (61,62) are formed simultaneously.

6. An electrical connector having rigid and elastomeric portions, a plurality of elongate passageways extending through the rigid and elastomeric portions and a plurality of electrically conductive means disposed in respective passageways, the connector being characterized in that:

a connector housing (10) includes means defining at least one cavity (18) extending from one end of the housing and a plurality of elongate passageways (26) extending through a rigid portion of said housing (10) and opening into said cavity;

a sealing member (61) formed and retained within the at least one cavity (18), the sealing member (61) having a plurality of elongate passageways (73) extending therethrough and generally aligned with and communicating with the plurality of passageways (26) in the connector housing (10); and

electrically conductive means positioned and located within the plurality of passageways of said rigid portion and said sealing member.

7. The electrical connector as claimed in claim 6, further characterized in that the connector housing (10) includes means defining a second cavity (19) extending from a second end of the housing (10) and a second sealing member (62) is formed and retained within the second end cavity (19), the second sealing member (62) having a plurality of passageways (74) extending therethrough generally aligned with the plurality of passageways (26) in the connector housing (10) and having the electrically conductive means positioned therein.

8. The electrical connector as claimed in claim 6 or 7, further characterized in that the connector housing includes retention portions on the interior wall of said first or second cavity (18,19), with said respective sealing members (61,62) being formed around said retention portions to retain said sealing members (61,62) in said cavities (18,19).

**Patentansprüche**

1. Verfahren zum Herstellen eines elektrischen Verbinders mit starren und elastomeren Abschnitten, wobei sich eine Vielzahl von Durchgängen durch die starren und elastomeren Abschnitte erstreckt und eine Vielzahl von elektrisch leitenden Mitteln in den jeweiligen Durchgängen angeordnet ist, **gekennzeichnet durch die Schritte:**

- Vorsehen eines Verbindergehäuses (10) mit Einrichtungen zur Begrenzung wenigstens eines Hohlraums (18) an einem seiner Enden, wobei sich eine Vielzahl von Durchgängen (26) durch einen starren Abschnitt des Gehäuses (10) erstreckt und zu dem Hohlraum öffnet;
- Positionieren einer Formungsplatte (43), um im wesentlichen wenigstens einen Abschnitt des wenigstens einen Endhohlraums (18) zur Bildung einer Form zur Aufnahme von elastomerem Dicht-

6

material zum Bilden eines Dichtelements (61) innerhalb des Hohlraums (18) zu verschließen, wobei die Formungsanordnung (41) eine Struktur (44) zur Begrenzung von Durchgängen (73) in dem Dichtelement (61) umfaßt;

- Schließen der Durchgänge (26), die sich durch den starren Abschnitt des Gehäuses (10) erstrecken;
- Formen eines Dichtelements (61) innerhalb des im wesentlichen geschlossenen Hohlraums, wobei das Dichtelement (61) eine Vielzahl von Durchgängen (73) hat, die sich durch dieses hindurch erstrecken und derart positioniert sind, daß sie allgemein mit der Vielzahl von Durchgängen (26) in dem Verbindergehäuse (10) ausgerichtet und in Verbindung sind, sowie Entfernen der Formungsanordnung (41); und
- Positionieren von elektrisch leitenden Einrichtungen innerhalb der Vielzahl von Durchgängen.

2. Verfahren zum Herstellen eines elektrischen Verbinders nach Anspruch 1, bei dem das Verbindergehäuseelement (10) einen Hohlraum (19) an einem zweiten Ende des Gehäuses (10) umfaßt und das Verfahren ferner durch die Schritte **gekennzeichnet** ist:

- Positionieren einer zweiten Formungsanordnung (42) zum im wesentlichen Verschließen wenigstens eines Abschnitts des zweiten Endhohlraums (19) zur Bildung einer Form zur Aufnahme von elastomerem Dichtmaterial zum Bilden eines zweiten Dichtelements (62) innerhalb des Hohlraums (19), wobei die zweite Formungsanordnung (42) eine Struktur (52) zur Begrenzung von Durchgängen (74) in dem zweiten Dichtelement (62) umfaßt; und
- Formen eines zweiten Dichtelements (62) innerhalb des im wesentlichen geschlossenen Hohlraums, wobei das zweite Dichtelement (62) eine Vielzahl von- Durchgängen (74) hat, die sich durch dieses hindurch erstrecken und derart positioniert sind, daß sie allgemein mit der Vielzahl von Durchgängen (26) in dem Verbindergehäuse (10) ausgerichtet sind.

3. Verfahren nach Anspruch 1 oder 2, **dadurch gekennzeichnet,** daß beim Formungsanordnungs-Positionierungsschritt eine Vielzahl von Stäben in die Vielzahl von Durchgängen (26) in dem Verbindergehäuse erstreckt wird, um die Durchgänge in dem Verbindergehäuse zu verschließen, wobei die Stäbe ferner Einrichtungen umfassen, um die Vielzahl von Durchgängen (73, 74) in dem Dichtelement (61, 62) zu definieren.

4. Verfahren nach Anspruch 1, 2 oder 3, **dadurch gekennzeichnet,** daß der Formungsschritt umfaßt:

- Injizieren eines elastomeren Dichtmaterials in den im wesentlichen geschlossenen Hohlraum; und
- Aushärten des elastomeren Materials innerhalb des im wesentlichen geschlossenen Hohlraums zum Bilden eines elastomeren Dichtelements (61, 62) innerhalb des Hohlraums.

5. Verfahren zum Herstellen eines elektrischen Verbinders nach Anspruch 2, **dadurch gekennzeichnet,** daß die ersten und zweiten Dichtelemente (61, 62) gleichzeitig geformt werden.

6. Elektrischer Verbinder mit starren und elastomeren Abschnitten, wobei sich eine Vielzahl von länglichen Durchgängen durch die starren und elastomeren Abschnitte erstreckt und eine Vielzahl von elektrisch leitenden Mitteln in den jeweiligen Durchgängen angeordnet ist, wobei der Verbinder dadurch **gekennzeichnet** ist,

- daß ein Verbindergehäuse (10) Mittel zur Begrenzung wenigstens eines Hohlraums (18) aufweist, der sich von einem Ende des Gehäuses erstreckt, und eine Vielzahl von länglichen Durchgängen (26) sich durch einen starren Abschnitt des Gehäuses erstreckt und in den Hohlraum öffnet;
- daß ein Dichtelement (61) innerhalb des wenigstens einen Hohlraums (18) geformt und gehalten ist, wobei sich durch das Dichtelement (61) eine Vielzahl von länglichen Durchgängen (73) hindurcherstreckt, die allgemein mit der Vielzahl von Durchgängen (26) in dem Verbindergehäuse (10) ausgerichtet und in Verbindung sind;
- und daß elektrisch leitende Einrichtungen innerhalb der Vielzahl von Durchgängen des starren Abschnitts und des Dichtelements positioniert und lokalisiert sind.

7. Elektrischer Verbinder nach Anspruch 6, **dadurch gekennzeichnet,** daß das Verbindergehäuse (10) eine Einrichtung aufweist, die einen zweiten Hohlraum (19) definiert, der sich von einem zweiten Ende des Gehäuses (10) erstreckt, und ein zweites Dichtelement (62) in dem zweiten Endhohlraum (19) geformt und gehalten ist, daß sich durch das zweite Dichtelement (62) eine Vielzahl von Durchgängen (74) hindurcherstreckt, die allgemein mit der Vielzahl von Durchgängen (26) in dem Verbindergehäuse (10) ausgerichtet sind und in denen die elektrisch leitenden Einrichtungen positioniert sind.

7

**8.** Elektrischer Verbinder nach Anspruch 6 oder 7, **dadurch gekennzeichnet,** daß das Verbindergehäuse Rückhalteabschnitte an der Innenwand des ersten oder zweiten Hohlraums (18, 19) besitzt, und daß die jeweiligen Dichtelemente (61, 62) um die Rückhalteabschnitte herum geformt sind, um die Dichtelemente (61, 62) in den Hohlräumen (18, 19) zu halten.

**Revendications**

**1.** Procédé pour réaliser un connecteur électrique comportant des parties rigide et élastomérique, plusieurs passages s'étendant à travers les parties rigide et élastomérique et plusieurs moyens électriquement conducteurs disposés dans des passages respectifs, le procédé étant caractérisé par les étapes qui consistent :

à utiliser un boîtier (10) de connecteur comprenant des moyens définissant au moins une cavité (18) à l'une de ses extrémités, et plusieurs passages (26) s'étendant à travers une partie rigide dudit boîtier (10) et s'ouvrant dans ladite cavité ;

à positionner une plaque (43) de formation pour fermer sensiblement au moins une partie de la ou des cavités extrêmes (18) afin de former un moule destiné à recevoir une matière élastomérique d'étanchéité pour former un élément d'étanchéité (61) à l'intérieur de la cavité (18), l'ensemble (41) de formation comprenant une structure (44) destinée à définir des passages (73) dans l'élément (61) d'étanchéité ;

à fermer lesdits passages (26) s'étendant à travers la partie rigide du boîtier (10) ;

à former un élément (61) d'étanchéité à l'intérieur de la cavité sensiblement fermée, l'élément (61) d'étanchéité étant traversé de plusieurs passages (73) positionnés de façon à être globalement alignés et à communiquer avec les passages (26) dans le boîtier (10) du connecteur, à enlever l'ensemble (41) de formation ; et

à positionner des moyens électriquement conducteurs dans les passages.

**2.** Procédé de réalisation d'un connecteur électrique selon la revendication 1, dans lequel l'élément de boîtier (10) du connecteur comprend une cavité (19) à une seconde extrémité du boîtier (10), et le procédé est en outre caractérisé par les étapes qui consistent :

à positionner un second ensemble (42) de formation pour fermer sensiblement au moins une partie de la seconde cavité extrême (19) afin de former un moule destiné à recevoir une matière élastomérique d'étanchéité pour former un second élément (62) d'étanchéité à l'intérieur de la cavité (19), le second ensemble (42) de formation comprenant une structure (52) destinée à définir des passages (74) dans le second élément (62) d'étanchéité ; et

à former un second élément (62) d'étanchéité à l'intérieur de la cavité sensiblement fermée, le second élément (62) d'étanchéité étant traversé de plusieurs passages (74) positionnés de façon à être globalement alignés avec les passages (26) du boîtier (10) du connecteur.

**3.** Procédé selon la revendication 1 ou 2, caractérisé en ce que ladite étape de positionnement de l'ensemble de formation consiste à faire passer plusieurs tiges dans lesdits passages (26) dudit boîtier de connecteur pour fermer lesdits passages dudit boîtier de connecteur, lesdites tiges comprenant en outre des moyens destinés à définir lesdits passages (73, 74) dans l'élément d'étanchéité (61, 62).

**4.** Procédé selon la revendication 1, 2 ou 3, caractérisé en ce que ladite étape de formation consiste :

à injecter une matière élastomérique d'étanchéité dans ladite cavité sensiblement fermée ; et

à faire durcir ladite matière élastomérique à l'intérieur de ladite cavité sensiblement fermée pour former un élément élastomérique (61, 62) d'étanchéité à l'intérieur de ladite cavité.

**5.** Procédé de réalisation d'un connecteur électrique selon la revendication 2, caractérisé en ce que lesdits premier et second éléments extrêmes d'étanchéité (61, 62) sont formés simultanément.

**6.** Connecteur électrique comportant des parties rigide et élastomérique, plusieurs passages allongés s'étendant à travers les parties rigide et élastomérique et plusieurs moyens électriquement conducteurs disposés dans des passages respectifs, le connecteur étant caractérisé en ce que :

un boîtier (10) de connecteur comprend des moyens définissant au moins une cavité (18) s'étendant depuis une extrémité du boîtier, et plusieurs passages allongés (26) s'étendant à travers une partie rigide dudit boîtier (10) et s'ouvrant dans ladite cavité ;

un élément (61) d'étanchéité formé et retenu à l'intérieur de la ou des cavités (18), l'élément (61) d'étanchéité étant traversé de plusieurs passages allongés (73), globalement alignés et communiquant avec les passages (26) du boîtier (10) du connecteur ; et

des moyens électriquement conducteurs positionnés et disposés à l'intérieur des passages de ladite partie rigide et dudit élément d'étanchéité.

7. Connecteur électrique selon la revendication 6, caractérisé en outre en ce que le boîtier (10) du connecteur comprend des moyens définissant une seconde cavité (19) s'étendant depuis une seconde extrémité du boîtier (10), et un second élément (62) d'étanchéité est formé et retenu à l'intérieur de la cavité (19) de la seconde extrémité, le second élément (62) d'étanchéité étant traversé de plusieurs passages (74) globalement alignés avec les passages (26) du boîtier (10) du connecteur et dans lesquels sont positionnés les moyens électriquement conducteurs.

8. Connecteur électrique selon la revendication 6 ou 7, caractérisé en outre en ce que le boîtier du connecteur comprend des parties de retenue sur la paroi intérieure de ladite première ou seconde cavité (18, 19), lesdits éléments respectifs (61, 62) d'étanchéité étant formés autour desdites parties de retenue pour retenir lesdits éléments (61, 62) d'étanchéité dans lesdites cavités (18, 19).

FIG. 1

FIG. 2

FIG. 3

FIG. 4

11

FIG. 6

FIG. 5

EP 0 204 732 B2